# EUROPÄISCHE PATENTSCHRIFT

(11) **EP 3 353 514 B1**
(45) Veröffentlichungstag und Bekanntmachung des Hinweises auf die Patenterteilung: **09.10.2019**
(21) Anmeldenummer: 16788412.1
(22) Anmeldetag: 16.09.2016
(51) Int. Cl.: G01K 1/02, G01K 7/32, F24C 7/08

(54) **TEMPERATURMESSSONDE**
TEMPERATURE MEASURING PROBE
SONDE DE MESURE DE TEMPÉRATURE

(30) Priorität: 23.09.2015 DE 102015012683
(43) Veröffentlichungstag der Anmeldung: 01.08.2018
(73) Patentinhaber: H. Heinz Meßwiderstände GmbH, 98716 Elgersburg (DE)
(72) Erfinder: HEINZ, Helmut, 98716 Elgersburg (DE); HEINZ, Haike, 98716 Elgersburg (DE)
(86) Internationale Anmeldenummer: PCT/DE2016/000345
(87) Internationale Veröffentlichungsnummer: WO 2017/050307

(56) Entgegenhaltungen:
- WO-A2-2012/100125
- DE-A1- 2 935 282
- DE-A1-102005 015 028
- DE-A1-102007 018 245
- DE-A1-102009 060 574
- DE-B4-102004 047 756
- DE-B4-102007 019 403
- US-A- 4 230 731

## Beschreibung

Die Erfindung betrifft eine Temperaturmesssonde mit einer hohlen Aussenhülle, die aus einem elektrisch leitfähigen Abschnitt dem Temperaturmessspieß und einen elektrisch isolierten Abschnitt mit dem Griff besteht, mit mindestens einem als Resonator ausgebildeten, im elektrisch leitfähigen Temperaturmessspieß angeordneten Temperatursensor, welche/r elektrisch leitend mit einer Kommunikationseinheit, zur drahtlosen Übermittlung der Temperaturinformation, wie z.B. mit einer Antenne, verbunden ist/sind.

In der DE 10 2004 047 756 B4 wird eine Temperaturmesssonde zur Erfassung einer Temperaturinformation vorbeschrieben, welche von mindestens zwei Innentemperaturen in verschiedenen Bereichen des Gargutes abhängig ist.

Bei dieser Lösung sind Schwingquarze mittels eines hochtemperaturtauglichen, leitfähigen Klebstoffs auf einem aus einer Dickschichtkeramik gefertigten Schaltungsträger verklebt.

Ein Nachteil dieser Lösung besteht darin, dass Schwingquarze lediglich für den Temperaturbereich von - 40° C bis + 120° C eingesetzt werden können. Zudem erschwert die stark nicht lineare Temperatur-Frequenz-Kennlinie der Schwingquarze sehr stark den Kalibrierprozess.

Gleichzeitig führt der zwingend Anwendung findende leitfähige Klebstoff gerade in Verbindung mit dem Einsatz von Schwingquarzen, mit zunehmender Lebensdauer des Temperaturmessspießes, zu Frequenzänderungen und so zu einer Verfälschung der Temperaturkennlinie.

Daneben weisen die eingesetzten Schwingquarze zudem eine alterungsbedingte, durch Oxidation hervorgerufene Frequenzdrift auf, die mit zunehmender Lebensdauer zu einer Änderung der Eigenfrequenz, und damit über die Einsatzzeit zu nicht zu vernachlässigenden Messfehlern führt.

Um nun zumindest die durch korrosive Fremdgase oxidationsbedingte Frequenzdrift zu behindern, wird bei der Lösung nach der DE 10 2004 047 756 B4 der Innenraum des Temperaturmessspießes, mit den dort angeordneten Schwingquarzen, mittels einer Glaslotdurchführung hermetisch abgedichtet, so dass ein während eines Herstellungsprozesses erzeugtes Vakuum, oder ein während der Befüllung des Innenraumes des Temperaturmessspießes mit einem Edelgas, beispielsweise mit Argon, erzeugter definierter Unterdruck Bestand hat.

Daher ist das für die Herstellung der Temperaturmesssonde nach der DE 10 2004 047 756 B4 benötigte Herstellungsverfahren sehr material- und fertigungsintensiv und daher auch sehr kostenaufwendig.

Daneben hat der aus Dickschichtkeramik gefertigte Schaltungsträger den Nachteil, dass dieser sehr leicht durch äußerer Belastungen, wie Schlag-, Stoß- oder Biegebeanspruchung zerbrochen werden kann, so dass zudem der aus Dickschichtkeramik gefertigte Schaltungsträger auch noch im Temperaturmessspieß sehr exakt lagepositioniert werden muss.

Zur Lagesicherung des aus Dickschichtkeramik gefertigten Schaltungsträgers müssen im Inneren des Temperaturmessspießes, den Schwingquarzen jeweils zugeordnet, Baugruppenträger aus Blech angeordnet werden.

Auch diese im Innern des Temperaturmessspießes zwingend zu positionierenden Baugruppenträger erhöhen zwangsläufig nochmals den Fertigungsaufwand und haben auch noch weitere zusätzliche Herstellungskosten zur Folge.

Eine andere mit einer Außenhülle versehene Temperaturmesssonde ist aus der DE 10 2005 015 028 A1 bekannt.

Auch bei dieser Lösung weist die Außenhülle einen elektrisch leitfähigen Abschnitt, den Temperaturmessspieß, und einen elektrisch isolierten Abschnitt, den Griff, auf.

In der hohlen Außenhülle des Temperaturmessspießes, dem elektrisch leitfähigen Abschnitt sind mehrere als Resonatoren ausgebildete Temperatursensoren mit jeweils separaten Zuleitungen angeordnet.

In der Serienfertigung ist die exakte Positionierung dieser mit separaten Zuleitungen versehenen Resonatoren im Temperaturmessspieß sehr fertigungsintensiv und kostenaufwendig.

Um nun die im elektrisch isolierten Abschnitt angeordnete, mit den Zuleitungen elektrisch leitend verbundene, als verkürzter Monopol ausgebildete Antenne, wie in der Antennentechnik zur Erzielung einer größtmöglichen Leistungsübertragung üblich, hinsichtlich der Impedanz besser an den Resonator anzupassen, weist diese Lösung eine Verlängerungsspule auf.

Dies ist bei verkürzten Monopolen erforderlich, da diese im allgemeinen eine sehr geringe Impedanz aufweisen und dadurch die Leistungsübertragung vom und zum Resonator deutlich eingeschränkt wird.

Um nun die in der Antennentechnik übliche Impedanzanpassung der Antenne an den Resonator platzsparender zu gestalten, stellte man sich in der DE 10 2007 019 403 B4 nun die Aufgabe bei einer Temperaturmesssonde für Haushaltsgeräte die Antenne kompakter auszubilden.

Dies wird in der Lösung nach der DE 10 2007 019 403 B4 in Verbindung mit einer als verkürzter Monopol ausgebildeten Antenne durch die Nutzung der Außenhülle, insbesondere des elektrisch isolierenden Abschnitts zur Impedanzanpassung, d.h. durch eine reproduzierbare Nutzung der Dachkapazität, erreicht.

Diese Dachkapazität wird zwischen der Antennenspitze und dem elektrisch leitenden Abschnitt der Außenhülle und einem dazwischen angeordneten, geeignet ausgewählten Dielektrikum gebildet.

Als Dielektrikum dient der elektrisch isolierende Abschnitt der Außenhülle, das Griffstück.

Die Antenne und der elektrisch isolierende Abschnitt der Außenhülle, das Griffstück, werden gemäß dieser Lösung nach der DE 10 2007 019 403 B4 im Bezug auf Material und Ausdehnung derart aufeinander abgestimmt, dass, wie in der Antennentechnik zwischen Verbraucher (Antenne) und Generator (Sender) zur Erzielung einer größtmöglichen Leistungsübertragung stets angestrebt, deren Wirkwiderstand etwa dem des als Resonator ausgebildeten Temperatursensors der Temperaturmesssonde in dessen Arbeitsfrequenzbereich entspricht.

Dabei ist auf Grund der aus den, aus der Lösung nach der 10 2007 019 403 B4 resultierenden Beschränkungen in der Gestaltung der Griffgeometrie eine freie anwendungsorientierte Gestaltung der Temperaturmesssonde nicht möglich.

Zur elektrischen Verbindung ist, bei der letztgenannten Lösung, zwischen der Antenne und dem Temperatursensor eine Koaxialleitung angeordnet, deren Wirkwiderstand dem des Sensors entspricht. Dadurch ist einerseits eine gute und sichere Reproduzierbarkeit der Impedanzanpassung gegeben, doch hat diese Lösung auch den sehr wesentlichen Nachteil, und zwar, dass die Verbindung zwischen Antenne und Leitung, insbesondere zwischen der Koaxialleitung und dem Sensor stets manuell hergestellt werden muss. Jede manuelle Bearbeitung von Verbindungsstellen durch Löten ist nicht nur zeitaufwendig und erfordert einen sehr hohen Fertigungsaufwand, sondern erfordert gleichzeitig gerade bei solch sehr kleinen Bauteilen mit noch kleineren Lötpads sehr erfahrene hochqualifizierte Mitarbeiter, da um den Sensor am Kabel anzulöten, zunächst Anlöthilfen (z.B. "Gäbelchen") an das Kabel angelötet werden müssen. Diese verändern dann den Wellenwiderstand der Koaxialleitung und damit deren Wirkwiderstand. Dadurch wird jedoch die am "Idealmodell" ermittelte Impedanzanpassung vom jeweiligen manuellen Lötprozess beeinflusst und dies führt zwangsläufig zu einer Verschlechterung der theoretisch ermittelten, optimalen Sende- und Empfangsleistung der Temperaturmesssonde.

Dabei erfordern diese Arbeiten nicht nur eine sehr ruhige Hand, sondern sie stellen auch eine hohe Belastung für die Augen der Bearbeiter dar.

Wobei in der Serienfertigung, aufgrund der manuell zu bearbeitenden, filigranen Lötstellen, weder mögliche Kurzschlüsse, mögliche kalte Lötstellen, oder auch Sensorbeschädigungen beim Anlöten keinesfalls ausgeschlossen werden können.

Doch nicht zuletzt sind diese Arbeitsplätze nicht nur mit einer hohen Belastung für die Augen verbunden, zudem ist der an diesen manuellen Lötarbeitsplätzen trotz modernster Absaugvorrichtungen, unvermeidbar auftretende Flussmitteldampf auch noch gesundheitsschädlich.

Ein weiterer Nachteil dieser Lösung besteht darin, dass die Lösung nach der DE 10 2007 019 403 B4 für den Einsatz von mehrerern Sensoren in einem Temperaturmeßspieß ungeeignet ist, da gemäß dieser Lösung jeder Sensor mit einem separaten Koaxialkabel verbunden sein muss.

Die Anordnung mehrerer Sensoren erfordert bei dieser vg. Lösung daher zwangsläufig auch stets mehrere Koaxialkabel, wobei sich mit jedem Sensor dann der erforderliche, diese Koaxialkabel aufnehmende Mindestinnendurchmesser des jeweils benötigten Temperaturmessspießes vergrößert.

Diese mit jedem weiteren Sensor im Temperaturmessspieß zwangsläufig verbundene stetige Vergrößerung des Außendurchmessers des Temperaturmessspießes hat bei mehreren Sensoren auf Grund des erforderlichen Messspießaußendurchmessers zwangsläufig dann eine nachhaltiger Beschädigung des Messgutes (z.B. Braten) zur Folge, so dass derartige Meßspießdurchmesser dann nicht mehr für Temperaturmessungen in Back- oder Bratgut geeignet sind.

Hinzu kommt, dass bei mehreren Kabeln dann die Verbindung der Kabel mit der Antenne auch fertigungstechnische Schwierigkeiten bereitet.

Somit können mittels der in der DE 10 2007 019 403 IM B4 vorgestellten Lösung keine anwendungsoptimierten Mehrpunkttemperaturmesssonden hergestellt werden.

Nachteil der in der DE 10 2007 019 403 B4 vorgestellten Lösung ist auch, dass in Verbindung mit der Einsatz findenden Lösung mit Monopolantenne ein großes Bezugspotential benötigt wird, so dass der Messspieß zwangsläufig tief in das Messgut eingestochen werden muss. Dies wiederum setzt großvolumiges Gargut, d.h. Gargut goßer Dicke, voraus.

Dabei ist bei Monopolantennen die Übertragungsweite so begrenzt, dass diese Lösung, wie in der Patentschrift, einschränkend auch angegeben, unter den oben genannten Einschränkungen zuverlässig auch nur in Haushaltsgeräte eingesetzt werden kann.

In großvolumigen Backöfen, wie beispielsweise in Industriebacköfen, ist diese Lösung keinesfalls zuverlässig einsetzbar.

Selbst eine Temperaturmessung am Backgut mit nur geringer, möglicher Einstechtiefe, ist mit der DE 10 2007 019 403 B4 vorgestellten Lösung wegen des Fehlens des zwingend erforderlichen großen Bezugspotentials nicht möglich.

Dabei kann die in der DE 10 2007 019 403 B4 vorgestellten Lösung, auf Grund der im Rahmen der Impedanzanpassung Anwendung findenden Werkstoffe, zudem auch nicht für die in Industriebacköfen üblichen Temperaturmeßbereiche von dauerhaft 250° C und kurzzeitig bis zu 310 °C eingesetzt werden.

In der DE 10 2007 018 245 A1 wird eine Temperatursonde für einen Ofen, ein Ofen und das Verfahren zum Betrieb eines Ofens beschrieben bei der die Positionierung der Temperaturmesssonde eine wesentliche Rolle spielt. Die benötigte Energie für die Sendemittel der Temperaturmesssonde wird bei dieser Lösung durch einen, zusätzlichen Bauraum benötigenden, wie auch die Ergonomie der Temperaturmesssonde beeinträchtigenden, Thermogenerator erzeugt, welcher während der Temperaturmessung, um Energie zu erzeugen , immer eine Temperaturdifferenz zwischen dem Inneren des Ofens und dem Backgut benötigt.

Bei zu geringen Temperaturdifferenzen kann daher der Fall eintreten, dass die erzeugte Energie für das Senden des Signals nicht mehr ausreicht.

Aus der DE 29 35 282 A1 ist weiterhin eine drahtlose Temperaturüberwachungseinrichtung bekannt bei der das sensitive Element der Temperaturmesssonde ein Kristalloszillator ist, der seine Resonanzfrequenz mit der Temperatur ändert, so dass im Gegensatz zu monolithisch integrierten Resonatoren, bei dieser in der DE 29 35 282 A1 vorbeschriebenen Lösung, weitere Bauelemente für den Resonanzschwingkreis benötigt werden die einerseits die Fertigungskosten und andererseits den Bauraum, insbesondere den erforderlichen Durchmesser der Umhüllung, erhöhen und die dann unter hohen Temperaturen noch zudem in ihrer Funktion beeinträchtigt sein können.

Aufgabe der Erfindung ist es daher eine Temperaturmesssonde zu entwickeln, die im Aufbau der Temperaturmesssonde, selbst in der Griffgeometrie, eine nicht von einer Impedanzanpassung beeinflusste, d.h. einer variable den jeweiligen Bedürfnissen des Anwenders gerecht werdende Gestaltung ermöglichen soll, dabei robust schlag- und stoßunempfindlich aufgebaut sein soll, und selbst unter extremen Einsatzbedingungen bei hoher Zuverlässigkeit, d.h. ohne Änderungen der Temperaturkennlinie, eine hohe Lebensdauer gewährleisten soll, dabei eine von der jeweils Einsatz findenden Antennenbauform, wie auch von der Anordnung des/der Sensors/Sensoren im Messspieß unabhängige, kostengünstige und fertigungstechnisch einfache Impedanzanpassung ermöglichen soll, und die es ermöglicht die mit einer hohen Belastung für die Augen verbundenen, mit Absaugvorrichtungen für den Flussmitteldampf ausgestatteten manuellen Lötarbeitsplätzen, durch eine vollautomatisierte Fertigung zu ersetzen, so dass die aus der manuellen Fertigung resultierenden Kurzschlüsse, kalte Lötstellen, oder auch beim Anlöten auftretenden Sensorbeschädigungen ausgeschlossen werden können, wobei die erfindungsgemäße Lösung gleichzeitig eine fertigungstechnisch einfache Positionierung des/der Sensors/Sensoren gewährleisten soll, und die zudem im Mindestdurchmesser eines sehr schlanken Temperaturmessspießes, der von seinem Durchmesser her bei herkömmlicher Fertigung mit Koaxialkabeln die Integration von nur einen Sensor/Resonator ermöglichen soll, und ohne Vergrößerung des Innendurchmessers des Temperaturemessspießes über dessen Länge auch die Integration von mehreren Sensoren/Resonatoren (Mehrpunktsensoren mit unterschiedlichen Frequenzen) ermöglicht werden sollen, wobei die erfindungsgemäße Lösung bei entsprechender Materialauswahl selbstverständlich auch in höheren Temperaturbereichen eingesetzt werden soll, und zur Meßwertübertragung in speziellen Ausführungsformen der erfindungsgemäßen Lösung, an Stelle der zumeist üblichen Monopolantennen, diese auch durch Dipolantennen ersetzt werden soll, wobei diese Ausführungsformen dann auch in Industriebacköfen, mit großen Innenräumen, eine sehr exakte Temperaturerfassung bei hoher Zuverlässigkeit und langer Lebensdauer gewährleisten sollen, und dabei die Ausführungsformen der erfindungsgemäßen Lösung mit Dipolantennen ein wesentlich geringes Bezugspotential aufweisen sollen, so dass Temperaturmesssonden mit Dipolantennen auch bei kleinvolumigem Gargut mit geringer möglicher Einstechtiefe des Messspießes sehr zuverlässige Meßergebnisse liefern soll, wobei für alle möglichen Ausführungsformen der zu entwickelnden Temperaturmesssonde charakteristisch sein soll, dass sie stets fertigungstechnisch einfach gefertigt und montiert, wie auch vollautomatisiert in Serie hergestellt werden können, und dabei selbst unter robusten Einsatzbedingungen bei hoher Zuverlässigkeit stets eine lange Lebensdauer gewährleisten sollen.

Erfindungsgemäß wird diese Aufgabe durch eine Temperaturmesssonde nach den Merkmalen des unabhängigen Anspruches der Erfindung gelöst. Vorteilhafte Ausführungen, Einzelheiten und Merkmale der Erfindung ergeben sich aus den Unteransprüchen sowie aus der nachfolgenden Beschreibung der erfindungsgemäßen Ausführungsbeispiele in Verbindung mit den zu den Ausführungsbeispielen gehörigen Darstellungen der möglichen Bauformen der erfindungsgemäßen Lösung.

Die Darstellungen zeigen dabei in der
- Figur 1 :: die Darstellung einer möglichen Bauform der erfindungsgemäßen Temperaturmesssonde 1;
- Figur 2 :: die räumliche Explosivdarstellung der erfindungsgemäßen Temperaturmesssonde 1 gemäß Figur 1;
- Figur 3 :: die räumliche Explosivdarstellung der erfindungsgemäßen in der Figur 2 dargestellten Messtransfereinheit 31 in einer Bauform mit Monopolantenne 24 in der Draufsicht;
- Figur 4 :: die räumliche Darstellung / Zusammenbauzeichnung der in der Figur 3 explosiv dargestellte erfindungsgemäßen Messtransfereinheit 31 in der Draufsicht;
- Figur 5 :: die Einzelheit B gemäß der Figur 4 ;
- Figur 6 :: die Einzelheit C gemäß der Figur 4 ;
- Figur 7:: die Schnittdarstellung der Einzelheit A gemäß Figur 1 (rechwinklig zur Schnittebene der Figur 6);
- Figur 8 :: die räumliche Darstellung der in der Figur 4 dargestellten Messtransfereinheit 31 in der Rückansichtsicht;
- Figur 9 :: die Einzelheit D gemäß der Figur 8 ;
- Figur 10:: die räumliche Darstellung des in den Figuren 2 bis 6 im eingebauten Zustand dargestellten Resonators 6 als Einzelteil in der Rückansicht;
- Figur 11:: die räumliche Darstellung einer anderen Bauform eines Resonators 6 (als Einzelteil) in der Rückansicht;
- Figur 12 A:: die erfindungsgemäße Messtransfereinheit 31 mit einer Monopolantenne 24 in monolithischer Bauform in der Seitenansicht;
- Figur 12 B:: die erfindungsgemäße Messtransfereinheit 31 mit einer Monopolantenne 24 in monolithischer Bauform in der Draufsicht mit mäanderförmig ausgebildeter Antennenleiterbahn 27;
- Figur 12 C:: die erfindungsgemäße Messtransfereinheit 31 mit einer Monopolantenne 24 inmonolitischer Bauform in der Draufsicht mit spiralförmig ausgebildeter Antennenleiterbahn 27;
- Figur 12 D:: die erfindungsgemäße Messtransfereinheit 31 mit einer Monopolantenne 24 in monolithischer Bauform in der Unteransicht;
- Figur 13 A:: die erfindungsgemäße Messtransfereinheit 31 in einer Bauform mit einer Dipolantenne 25 in der Draufsicht;
- Figur 13 B:: die erfindungsgemäße Messtransfereinheit 31 in der Bauform mit einer Dipolantenne 25 gemäß Figur 13B in der Unteransicht;
- Figur 14 A:: eine mögliche Bauform der Temperaturmesssonde 1 mit Dipolantenne 25 im Endmontagezustand;
- Figur 14 B:: eine weitere mögliche Bauform der Temperaturmesssonde 1 mit Dipolantenne 25 im Endmontagezustand.

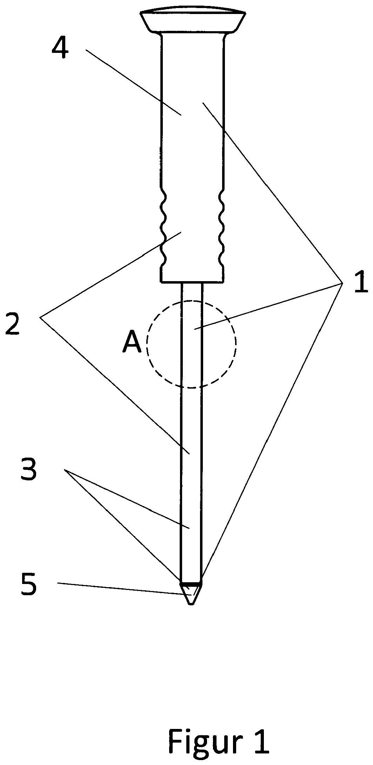

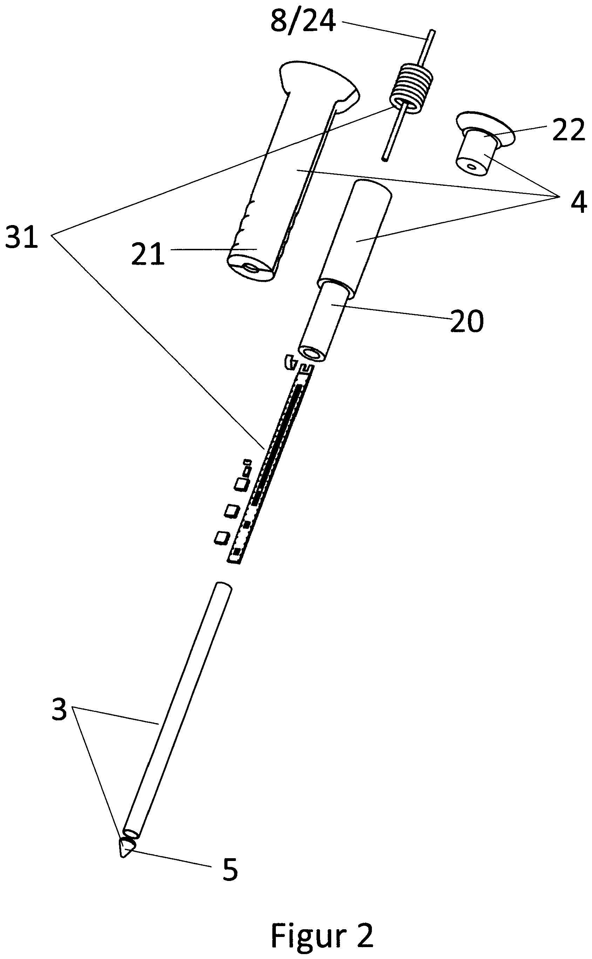

Die in der Figur 1 im Zusammenbau und in der Figur 2 räumlich und explosiv dargestellte Temperaturmesssonde 1, besteht aus einer hohlen Aussenhülle 2, die aus einem elektrisch leitfähigen, aus einem metallischen Material gebildeten Abschnitt, dem Temperaturmessspieß 3, und einen elektrisch isolierten, aus einem nichtmetallischen Material gebildeten Abschnitt, dem Griff 4, gebildet wird.

In dem elektrisch leitfähigen Temperaturmessspieß 3 mit einer Spitze 5 sind mindestens ein oder auch mehrere, in der Bauform gemäß Figur 2 drei, als Resonatoren 6 ausgebildeten Temperatursensoren angeordnet.

Diese sind einerseits mit dem elektrisch leitfähigen Temperaturmessspieß 3 über den Masseleiter 7 und andererseits mit der im elektrisch isolierten Griff 4 angeordneten Antenne 8 über den Signalleiter 9 elektrisch leitend verbunden. Der Griff 4 wird von einer, insbesondere der Aufnahme der Antenne 8 dienenden, aus einem nicht elektrisch leitfähigen Hartstoff gebildeten Griffhülse 20 gebildet, auf der ein elastischen Griffstück 21 angeordnet ist, welches am freien Ende durch einen Deckel 22 verschlossen wird.

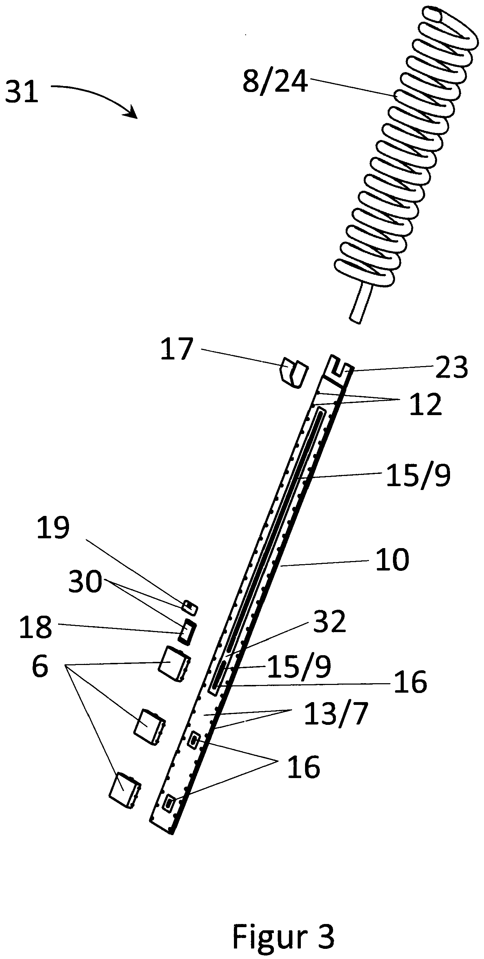

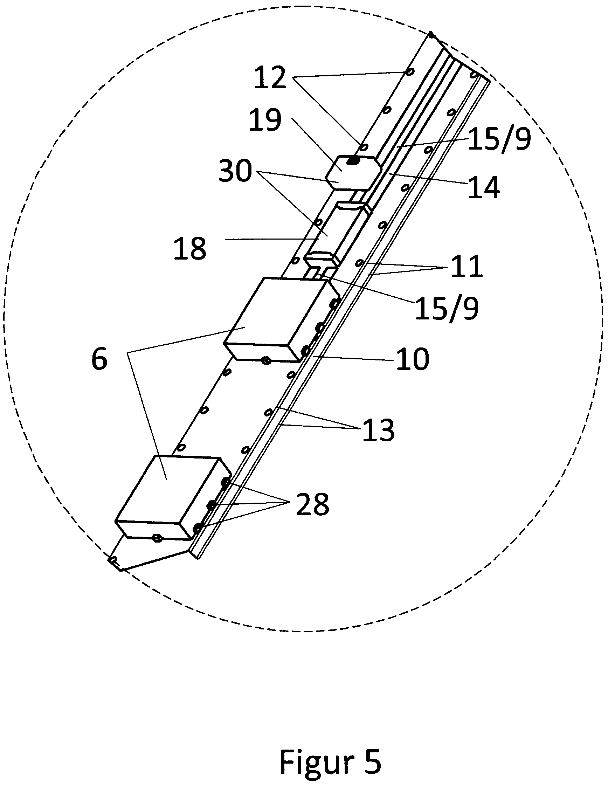

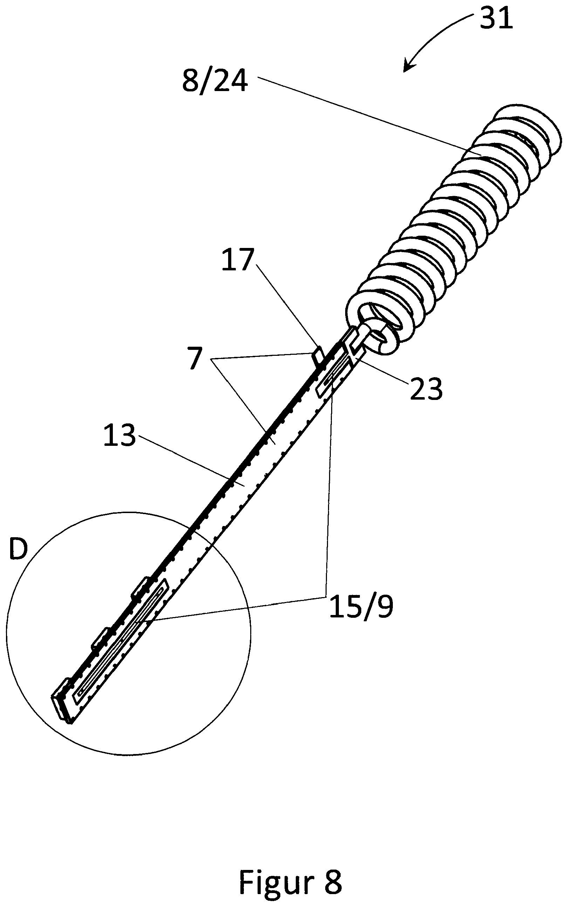

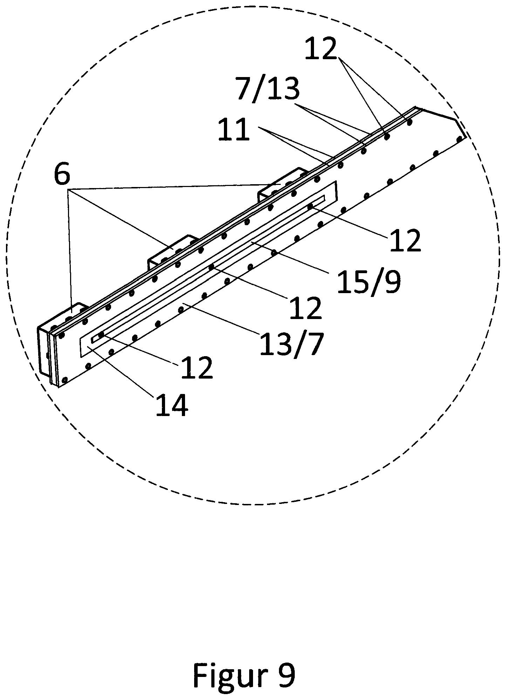

Die Figuren 3 bis 9 zeigen nun den Innenaufbau der erfindungsgemäßen Temperaturmesssonde 1, die erfindungsgemäße Messtransfereinheit 31, mit den Details der erfindungsgemäßen Anordnung der einzelnen Bauteile und Baugruppen.

Diese erfindungsgemäße Messtransfereinheit 31 kann maschinell vorgefertigt werden und ermöglicht zudem eine fertigungstechnisch einfache, schnelle und exakte maschinelle Endmontage der erfindungsgemäßen Temperaturmesssonde 1.

Erfindungswesentlich ist dabei, dass in der Temperaturmesssonde 1 ein plattenförmiger, aus einem elektrisch isolierendem Kunststoff bestehender Sensorträger 10 angeordnet ist, der als Grundkörper selbst unter hohen Temperaturbeanspruchungen langlebig ist und unter extremen Beanspruchungen über lange Zeit eine hohe, zuverlässige Biege- und Bruchsicherheit gewährleistet, dabei gut zu bearbeiten und zuverlässig mit leitfähigen Materialien zu beschichten ist.

Kennzeichnend ist weiterhin, dass auf den gegenüberliegenden Oberflächen 11 des Sensorträgers 10 beidseitig Massenleiterflächen 13 angeordnet sind, die in ihrer Gesamtheit als Masseleiter 7 dienen und mittels Durchkontakte 12 elektrisch leitend miteinander verbunden sind.

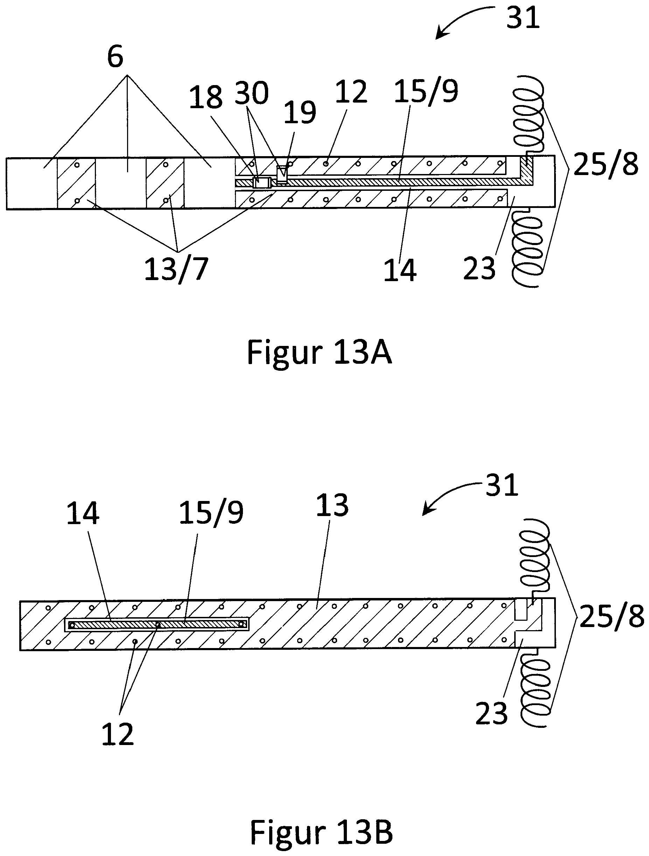

Diese beidseitigen Massenleiterflächen 13 ermöglichen einerseits eine optimale Bestückung der Messtransfereinheit 31 und bewirken gleichzeitig, wie in Verbindung mit Figur 13 noch näher erläutert, dass der Wirkwiderstand des Sensorträger 10 unabhängig von der Anordnung des Sensorträgers 10 im Temperaturmessspieß 3, d.h. unabhängig vom Abstand zwischen dem Sensorträger 10 und der Innenwandung des Temperaturmessspießes 3, ist. Gleichzeitig bewirkt die beidseitige Anordnung der Massenleiterflächen 13, am Sensorträger 10 im Zusammenhang mit deren mechanischen Verbindung mittels der Durchkontakte 12 einerseits eine hoch zuverlässigen, biegestabilen Befestigung der Massenleiterflächen 13 am Sensorträger 10 und gleichzeitig eine Erhöhung der Biegesteifigkeit des erfindungsgemäßen Verbindungsbauteils, wodurch dieses sehr robust, schlag- und stoßunempfindlich wird und so selbst extremen Einsatzbedingungen gerecht werden kann.

Wesentlich ist in diesem Zusammenhang weiterhin, dass in den Massenleiterflächen 13 ein- oder beidseitig des Sensorträgers 10 Freiflächen 14 derart angeordnet sind, dass mittig in diesen Freiflächen 14 von der/den Massenleiterflächen 13 elektrisch isolierend beabstandet, Signalleiterbahnen 15 angeordnet sind, welche sofern sie beidseitig auf den gegenüberliegenden Oberflächen 11 des Sensorträger 10 angeordnet sind, untereinander mittels Durchkontakte 12 elektrisch leitend verbunden sind, und damit in ihrer Gesamtheit den Signalleiter 9 ausbilden.

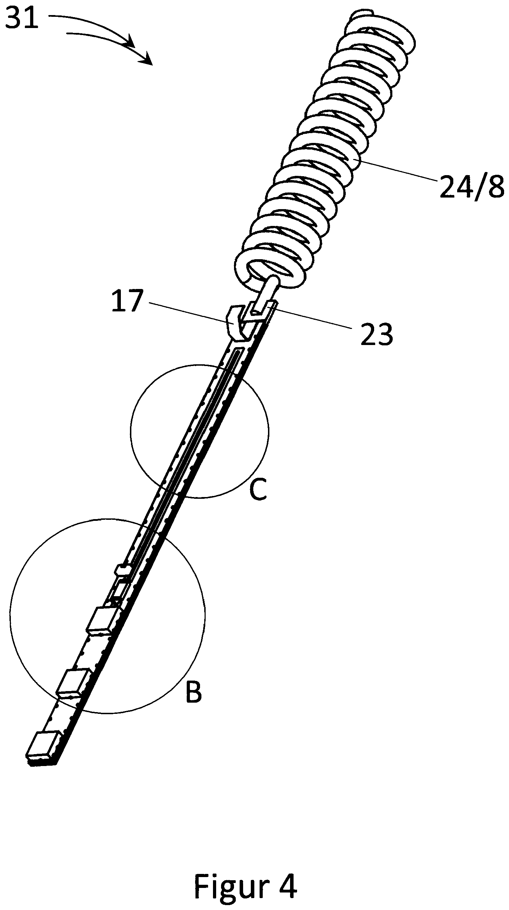

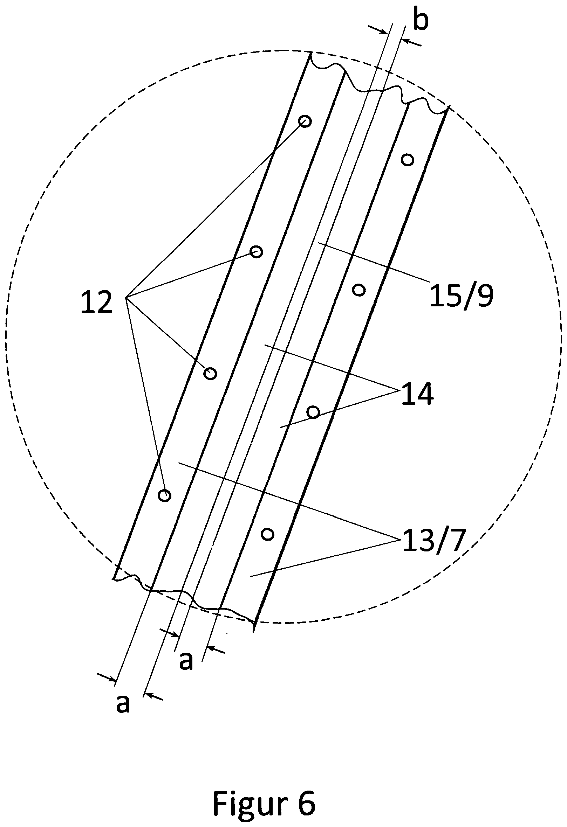

Die Figur 6 zeigt die Einzelheit C gemäß der Figur 4 mit einem Abschnitt des Sensorträgers 10 mit der Masseleiterfläche 13, der innerhalb der Masseleiterfläche 13 angeordneten Freifläche 14 mit der Freiflächenbreite a, und der mittig in der Freifläche 14 angeordneten die Signalleiterbahn 15 mit der Signalleiterbahnbreite b.

Die zwischen der Masseleiterfläche 13 und der Signalleiterbahn 15 verbleibenden Bereiche der Freifläche 14 bilden die Isolationsschicht zwischen der Masseleiterfläche 13 und der Signalleiterbahn 15.

Der Wirkwiderstand des Sensorträges 10 ist bei der erfindungsgemäßen beidseitigen Anordnung von Masseleiterflächen 13 am Sensorträger 10 nur von der Freiflächenbreite a, der Signalleiterbahnbreite b und der Materialdicke d des Sensorträgers abhängig.

Ein wesentliches Merkmal der Erfindung ist auch, dass den jeweiligen Kontaktanordnungen am/an den eingesetzten Resonator/en 6 zugeordnet, in der resonatorseitigen Massenleiterfläche 13 eine/mehrere weitere, d.h. zusätzliche, Freifläche/n 14 angeordnet sein können, in der/den wiederum von der/den Massenleiterfläche/n 13 beabstandet, d.h. elektrisch isoliert Signalkontaktflächen 16 angeordnet sind, die mittels Durchkontakten 12 elektrisch leitend mit dem auf der gegenüberliegenden Oberfläche 11 des Sensorträgers 10 verlaufenden Signalleiter 9 verbunden sind.

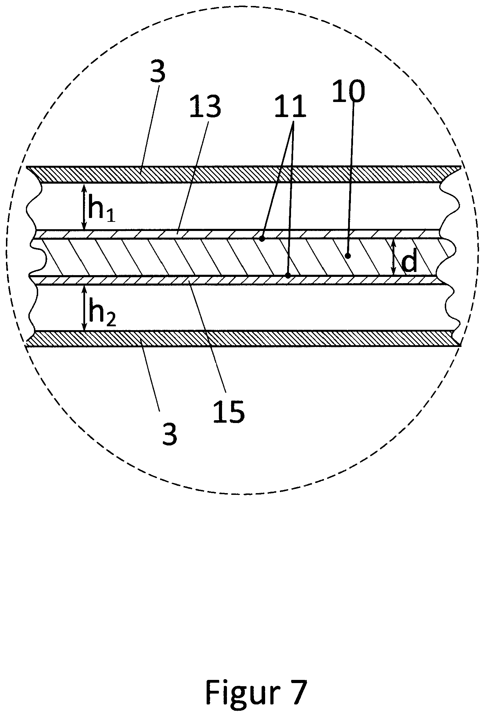

Die Figur 7 zeigt die Einzelheit A gemäß der Figur 1 (rechwinklig zur Schnittebene der Figur 6) im Schnitt, mit einer Seitenansicht eines in einem (an sich beliebigen) Temperaturmessspieß 3 angeordneten erfindungsgemäßen Sensorträgers 10.

Die Wandabstände h₁ und h₂ beschreiben den Abstand zwischen der Innenwandung des Temperaturmessspießes 3 und der jeweils benachbarten, sowohl auf der oberen als auch auf der unteren Oberfläche 11 des Sensorträgers 10 angeordneten Massenleiterfläche 13.

Der Parameter d ist die Materialdicke des Sensorträgers 10.

Aufgrund der erfindungsgemäßen beidseitig am Sensorträger 10 angeordneten Massenleiterfläche 13 ist, wie bereits in Verbindung mit der Darstellung in Figur 6 erläutert der Wirkwiderstand des Sensorträges 10 bei der erfindungsgemäßen Lösung nur von der Freiflächenbreite a, der Signalleiterbahnbreite b und der Materialdicke d des Sensorträgers abhängig, d.h. der Wirkwiderstand des Sensorträgers 10 ist auf Grund der erfindungsgemäßen Lösung unabhängig von den jeweiligen Wandabständen h₁ und h₂.

Auf Grund der erfindungsgemäßen beidseitigen Anordnung von Massenleiterflächen 13 am Sensorträger 10 wird der Wirkwiderstand erfindungsgemäß unabhängig von den Wandabständen h₁ und h₂, zwischen der Innenwandung des Messspießes 3 und der auf der jeweils benachbarten Oberfläche des Sensorträgers 10 angeordneten Massenleiterfläche 13. Dadurch kann der Wirkwiderstand am Sensorträger 10 unabhängig von seiner Anordnung im Temperaturmessspieß 3 entworfen und auf den/die Resonator/en 6 abgestimmt werden.

Dies hat fertigungstechnisch zur Folge, dass der Sensorträger 10 einfach, ohne die Einhaltung von montageintensiven Toleranzen in den Temperaturmessspieß 3 eingeschoben werden kann, ohne dass sich der Wirkwiderstand des Sensorträgers 10 verändert und dadurch das Messergebnis verfälscht wird.

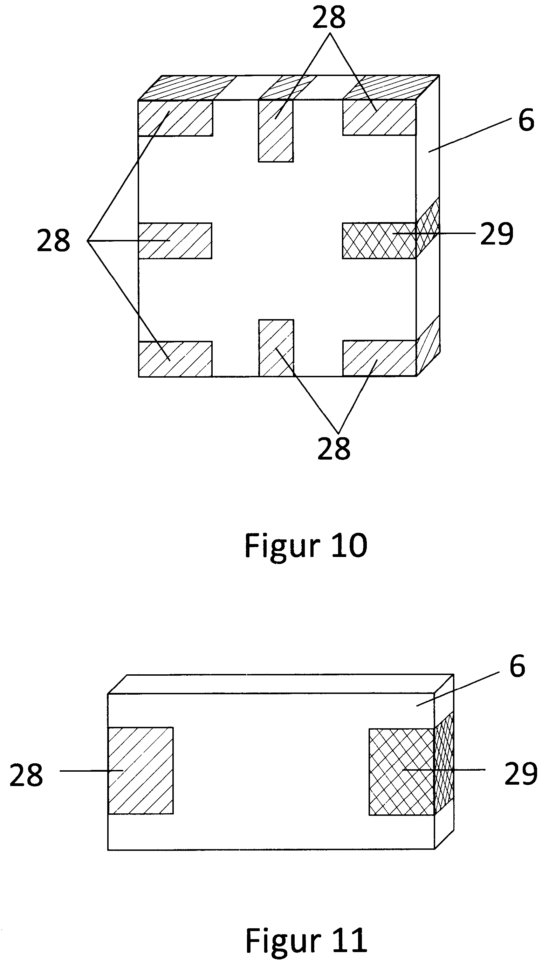

Kennzeichnend ist auch, dass der/die Resonator/en 6 am Sensorträger 10 derart angeordnet sind, dass dieser/diese elektrisch leitend einerseits mit der/den Massenleiterflächen 13 und andererseits entweder direkt mit den Signalleiterbahnen 15 oder mit den Signalkontaktflächen 16 verbunden ist/sind. Für die industrielle Fertigung ist die durch die erfindungsgemäße Lösung bewirkte, exakte definierte Beabstandung/Anordnung der Signalleiterbahnen 15 und der Signalkontaktflächen 16 zu den Masseleiterflächen 13 ausschlaggebend dafür, dass einerseits die, an den in den Figuren 10 und 11 dargestellten Resonatoren 6, angeordneten Signallötpads 29 maschinell mit den Signalkontaktflächen 16 elektrisch leitend verbunden/verlötet, und andererseits die ebenfalls den an den Resonatoren 6 angeordneten, in den Figuren 10 und 11 dargestellten, Masselötpads 28 mit der Massenleiterfläche 13 ebenfalls maschinell elektrisch leitend verbunden/verlötet werden können, wodurch eine sehr exakte, fertigungstechnisch einfache Montage des/der Resonators/en 6 (Sensors/Sensoren) gewährleistet ist.

Infolge der erfindungsgemäße Lösung möglichen Automatisierung wird eine schnelle, exakte, funktionell sehr zuverlässige, maschinelle Fertigung der erfindungsgemäßen Messtransfereinheit 31 gewährleister, die eine kostengünstige und fertigungstechnisch einfache Herstellung und Montage des bisher von manueller Arbeit dominierten Produktionsprozesse ermöglicht. Erfindungsgemäß ist am Sensorträger 10 eine mit den Signalleiterbahnen 15 verbundene Antenne 8 angeordnet.

Erfindungswesentlich ist, dass am Sensorträger 10, zwischen der Antenne 8 und dem/den Resonator/en 6, eine Impedanzanpassungseinheit 30 angeordnet ist, die aus einem Kondensator 18 und einer Induktivität 19 besteht, wobei im Bereich der Anordnung des Kondensators 18 in der Signalleiterbahn 15 eine Unterbrechung 32 angeordnet ist, die von dem im Bereich dieser Unterbrechung 32 angeordneten Kondensator 18 elektrisch überbrückt wird, indem dieser mit den beiden der Unterbrechung 32 beabstandet benachbarten Endstücken der Signalleiterbahn 15, oder mit den beiden dort voneinander beabstandet angeordneten Signalkontaktflächen 16, elektrisch leitend verbunden ist, wobei die diesem Kondensator 18 benachbart angeordnete Induktivität 19 einerseits mit der Signalleiterbahn 15, oder einer dort angeordneten Signalkontaktfläche 16, und andererseits mit der/den Massenleiterfläche/n 13 des Masseleiters 7 elektrisch leitend verbunden ist, wobei die Impedanzanpassungseinheit 30 so ausgelegt/bemessen ist, dass der Wirkwiderstand der Antenne 8 etwa dem Wirkwiderstand des/der Resonators/Resonatoren 6 in dessen/deren Arbeitsfrequenzbereich entspricht. Diese im Rahmen der erfindungsgemäßen Lösung, zwischen der Antenne 8 und dem/den Resonator/en 6, angeordnete Impedanzanpassungseinheit 30 ermöglicht eine vom Material des Griffes 4, der Antennenbauform aber auch vom Temperaturmessspieß 3 und der Anordnung des/der Sensors/Sensoren im Temperaturmessspieß 3 unabhängige, kostengünstige und insbesondere exakt dem jeweiligen Bautyp optimal angepasst auszuführende, fertigungstechnisch einfach zu gestaltende Impedanzanpassung die zudem mit beliebiger, gestalterisch frei wählbarer Griffgeometrie auch vollautomatisiert in Serie gefertigt werden kann.

Erfindungsgemäß ist am Sensorträger 10 eine mit der/den Massenleiterfläche/n 13 verbundene Massekontaktfeder 17 derart angeordnet, dass diese im Endmontagezustand der Temperaturmesssonde 1 an der Innenwandung des elektrisch leitfähigen Temperaturmessspießes 3 elektrisch leitend anliegt. Wesentlich ist auch, dass wie in den Figuren 3, 4 und 8 dargestellt, zur Aufnahme der Antenne/n 8, hier einer Monopolantenne 24, in einer antennenseitigen Freifläche 14 am Sensorträger 10 ein mit der Signalleiterbahn 15 elektrisch leitend verbundenes Antennenaufnahmeelement 23 angeordnet ist.

Dieses am Sensorträger 10 angeordnete Antennenaufnahmeelement 23 ist eine optimale Antennenbefestigung unter Beachtung der Erfordernisse einer vollautomatischen industriellen Fertigung.

Mittels der erfindungsgemäße Lösung ist es somit gelungen in einem für einen sehr schlanken Temperaturmessspieß ausgelegten Mindestdurchmesser, der von seinem Durchmesser her gerade einmal die Integration von nur einen Sensor/Resonator, des jeweils Einsatz findenden Sensor-/Resonatortyps, ausreicht, ohne Vergrößerung des Innendurchmessers des Temperaturmessspießes auch mehrere Sensoren/Resonatoren (Mehrpunktsensoren mit unterschiedlichen Frequenzen über die Länge des Temperaturmessspießes so zu integrieren, dass die Herstellung dieser Lösung voll automatisiert erfolgen kann.

Die Figur 11 zeigt in der Rückansicht die räumliche Darstellung einer gegenüber den in den bisherigen Darstellungen anderen Bauform eines Resonators 6 (als Einzelteil).

Auch diese in der Figur 11 dargestellte Bauform eines Resonators 6, mit einer gegenüber der Darstellung des Resonators 6 in der Figur 10 abweichenden Anordnung der Masselötpads 28 und der Signallötpads 29, kann, mit einer entsprechend angepassten Anordnung der Massenleiterflächen 13 und der Signalkontaktflächen 16 an einem dieser Resonatorbauform zugeordneten Sensorträger 10, optimal auf einer erfindungsgemäßen Messtransfereinheit 31 angeordnet werden.

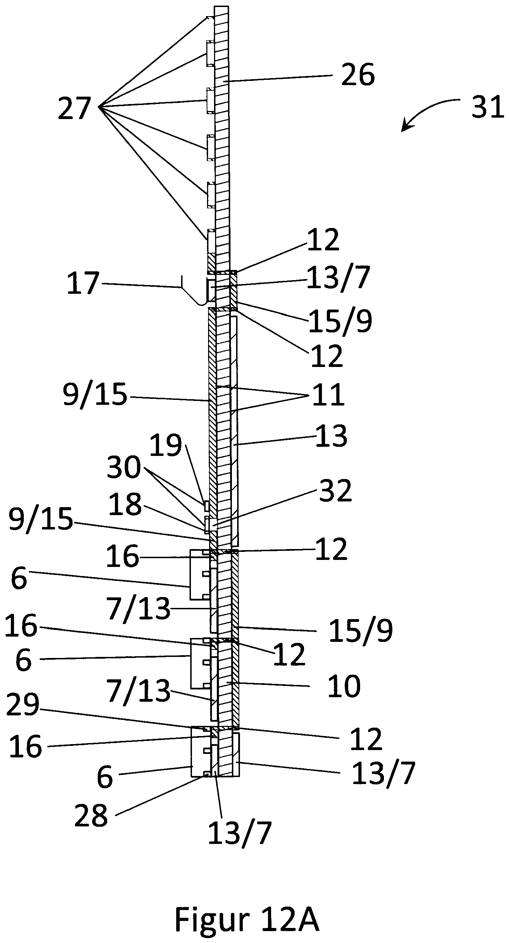

Kennzeichnend ist auch, dass, wie in den Figuren 12A bis 12D dargestellt, unmittelbar am Sensorträger 10 eine Antennenträgerplatte 26 angeordnet ist, d.h. dass der Sensorträger 10 zusammen mit der Antennenträgerplatte 26 einstückig/monolithisch ausgebildet ist, wobei auf der Antennenträgerplatte 26 eine elektrisch leitend mit der Signalleiterbahn 15 verbundene Antennenleiterbahn 27 angeordnet ist.

Diese einstückigen / monolithischen Bauformen von Messtransfereinheiten 31 mit integrierter Monopolantenne 24 sind sehr kostengünstig zu fertigen.

In der Figur 12A ist nun eine solche Bauform einer erfindungsgemäßen Messtransfereinheit 31 mit Monopolantenne 24 in monolitischer Bauform in der Seitenansicht dargestellt.

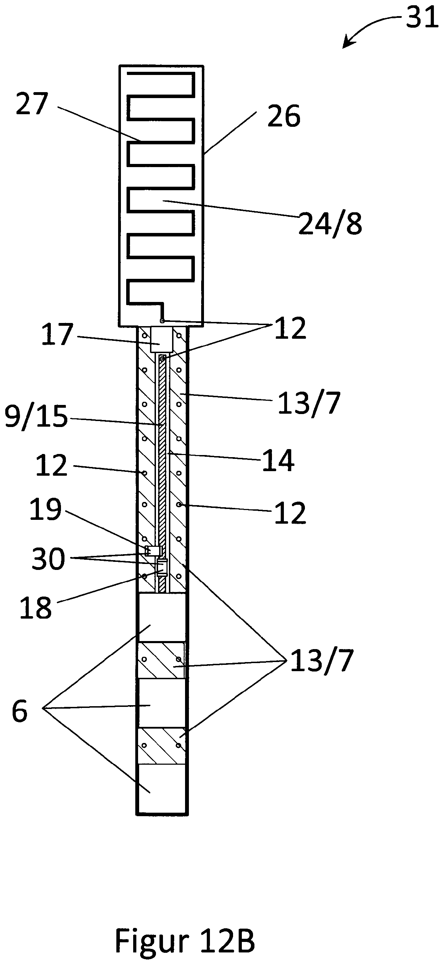

Die Figur 12B zeigt die erfindungsgemäße Messtransfereinheit 31 mit Monopolantenne 24 in monolitischer Bauform in der Draufsicht mit mäanderförmig ausgebildeter Antennenleiterbahn 27.

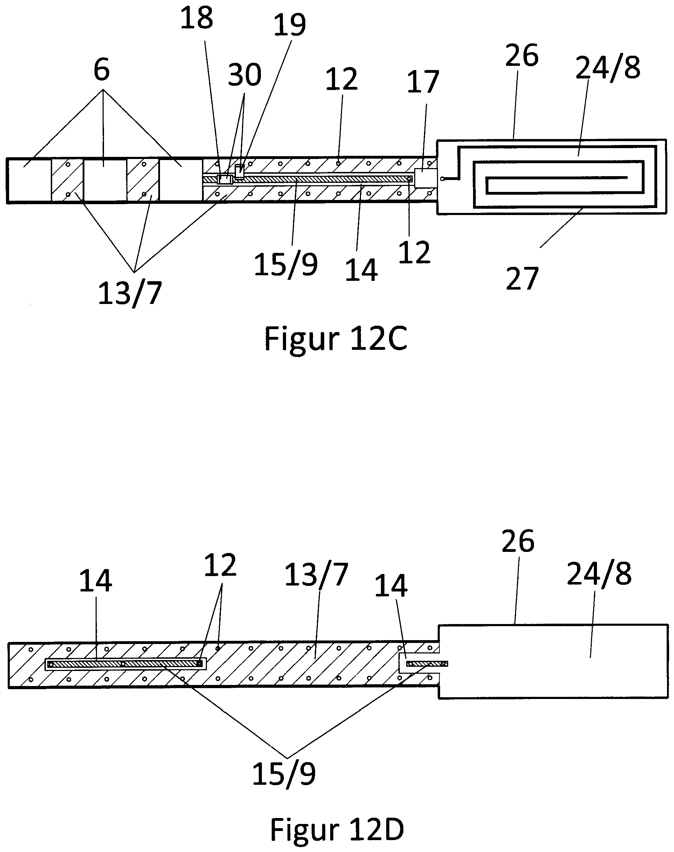

Die Figur 12C zeigt eine weitere mögliche Bauform der erfindungsgemäßen Messtransfereinheit 31 mit Monopolantenne 24 in monolitischer Bauform in der Draufsicht mit einer spiralförmig ausgebildeten Antennenleiterbahn 27.

In der Figur 12D ist die erfindungsgemäße Messtransfereinheit 31 mit Monopolantenne 24 in monolitischer Bauform in der Unteransicht dargestellt. Die in den bisherigen Ausführungsbeispielen dargestellten Monopolantenne 24 hat jedoch noch den Nachteil einer für großvolumige Industriebacköfen zu geringen Reichweite, die auf Grund fehlender Symmetrieeigenschaften aus einer ungleichmäßigen Feldverteilung bei schlechter Strahlcharakteristik resultiert.

Zudem benötigen Monopolantennen stets ein großes Bezugspotential, d.h. eine große Masse, wodurch es erforderlich ist, dass bei den im Stand der Technik üblichen Bauformen, bei denen der Außenleiter des Koaxialkabels mit der Edelstahlhülle des Temperaturmeßspießes fest verpresst ist, der Temperaturmessspieß stets tief in das Gargut eingestochen werden muss, um dieses großes Bezugspotential zu gewährleisten.

Daher können Temperaturmesssonden mit Monopolantennen eine zuverlässige Innentemperaturmessung in "dünnwandigeren" Gar- oder Backgüter nicht gewährleisten.

Aufgrund der erfindungsgemäßen Lösung, sowie aufgrund der erfindungsgemäß, fertigungstechnisch sehr einfach zu realisierenden Impedanzanpassung ist es mittels der erfindungsgemäßen Lösung, erstmals problemlos möglich, in Verbindung mit einer etwas anderen Gestaltung des an der Temperaturmesssonde angeordneten Griffes, Monopolantennen durch Dipolantennen mit besseren Symmetrieeigenschaften, besserer Strahlcharakteristik und gleichmäßiger Feldverteilung und daraus resultiuerenden höheren Reichweiten zu ersetzten.

Ein weiterer Vorteil des Einsatzes von Dipolantennen in Verbindung mit der erfindungsgemäßen Lösung ist das bei Dipolantennen benötigte wesentlich geringe Bezugspotential, so dass diese mit Dipolantennen ausgestatteten Temperaturmesssonden auch bei kleinvolumigem Gargut mit geringer möglicher Einstechtiefe des Messspießes sehr zuverlässige Meßergebnisse liefern.

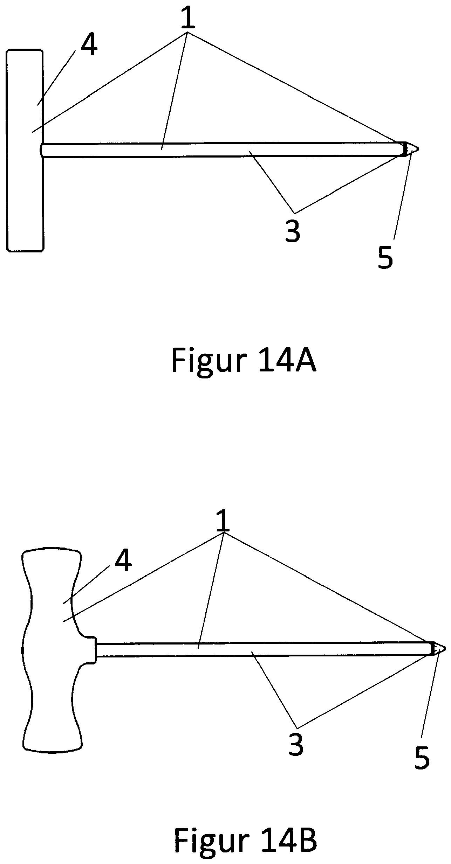

Diese erfindungsgemäßen, mit Dipolantennen 25 ausgestatteten Bauformen von Temperaturmesssonden 1 sind in den Figuren 13 und 14 dargestellt.

Die Figur 13A zeigt eine erfindungsgemäße Messtransfereinheit 31 mit einer Dipolantenne 25 in der Draufsicht.

In der Figur 13B ist die erfindungsgemäße Messtransfereinheit 31 mit Dipolantenne 25 in der Unteransicht dargestellt.

Dabei sind wie in den Figuren 13A und 13B dargestellt, an dem am Sensorträger (10) angeordneten Antennenaufnahmeelement (23) beispielsweise an einer Seite des Sensorträgers (10) einer der beiden Pole der Dipolantenne (25) elektrisch leitend mit der Signalleiterbahn (15) verbunden, wobei an der anderen Seite des Sensorträgers (10) der andere der beiden Pole der Dipolantenne (25) elektrisch leitend mit der/den Massenleiterfläche/n (13) verbunden ist.

Diese mit Dipolantennen 25 ausgestatteten Bauformen der erfindungsgemäßen Lösung sind daher auch für den Einsatz in Industriebacköfen, mit großen Innenräumen, geeignet und ermöglichen auch dort bei hoher Zuverlässigkeit und langer Lebensdauer eine sehr exakte Temperaturerfassung.

Die Figur 14A zeigt eine der möglichen Bauformen der erfindungsgemäßen Temperaturmesssonde 1 mit einer Dipolantenne 25 im Endmontagezustand.

In der Figur 14B ist eine weitere mögliche Ausführungsform der erfindungsgemäßen Temperaturmesssonde 1 mit einer Dipolantenne 25 im Endmontagezustand dargestellt.

Bei entsprechender Materialauswahl beispielsweise PTFE für den Sensorträgers 10, und PEEK für den Griff 4, kann die erfindungsgemäße Temperaturmessonde auf Dauer im Temperaturmeßbereich bis 250 ° C und Kurzzeitg selbst im Temperaturbereich bis 310 ° C eingesetzt werden.

Mittels der erfindungsgemäßen Lösung ist es somit gelungen eine Temperaturmesssonde zu entwickeln, die in der Gestaltung den Bedürfnissen des Benutzers variabel, d.h. beliebig angepasst werden kann, dabei robust, schlag- und stoßunempfindlich aufgebaut ist, in speziellen Ausführungsformen auch in Industriebacköfen eingesetzt werden kann, und stets selbst unter sehr extremen Einsatzbedingungen über die gesamte Einsatzzeit ohne Änderungen in der Temperaturkennlinie eine hoher Zuverlässigkeit bei hoher Lebensdauer, gewährleistet, und dabei in all den möglichen Ausführungsformen stets fertigungstechnisch einfach (insbesondere ohne die gegenwärtig noch benötigten manuellen Lötarbeitsplätze) gefertigt und montiert, wie auch vollautomatisiert in Serie hergestellt werden kann, und dabei selbst unter robusten Einsatzbedingungen bei hoher Zuverlässigkeit stets eine lange Lebensdauer auch unter extremen Einsatzbedingungen gewährleisten.

### Bezugszeich nzusammenstellung

- 1: Temperaturmesssonde
- 2: Außenhülle
- 3: Temperaturmessspieß
- 4: Griff
- 5: Spitze
- 6: Resonator
- 7: Masseleiter
- 8: Antenne
- 9: Signalleiter
- 10: Sensorträger
- 11: Oberfläche
- 12: Durchkontakt
- 13: Massenleiterfläche
- 14: Freifläche
- 15: Signalleiterbahn
- 16: Signalkontaktfläche
- 17: Massekontaktfeder
- 18: Kondensator
- 19: Induktivität
- 20: Griffhülse
- 21: Griffstück
- 22: Deckel
- 23: Antennenaufnahmeelement
- 24: Monopolantenne
- 25: Dipolantenne
- 26: Antennenträgerplatte
- 27: Antennenleiterbahn
- 28: Masselötpad
- 29: Signallötpad
- 30: Impedanzanpassungseinheit
- 31: Messtransfereinheit
- 32: Unterbrechung
- a: Freiflächenbreite
- b: Signalleiterbahnbreite
- d: Materialdicke
- h₁: Wandabstand 1
- h₂: Wandabstand 2

## Patentansprüche

1. Temperaturmesssonde (1), mit einer hohlen Aussenhülle (2), die aus einem elektrisch leitfähigen, aus einem metallischen Material gebildeten Abschnitt, dem Temperaturmessspieß (3), und einen elektrisch isolierten, aus einem nichtmetallischen Material gebildeten Abschnitt, dem Griff (4), besteht, wobei in dem elektrisch leitfähigen Temperaturmessspieß (3) mit einer Spitze (5) mindestens ein als Resonator (6) ausgebildeter Temperatursensor angeordnet ist, welcher/welche einerseits mit dem elektrisch leitfähigen Temperaturmessspieß (3) über einen Masseleiter (7) und andererseits mit einer im elektrisch isolierten Griff (4) angeordneten Antenne (8) über einen Signalleiter (9) elektrisch leitend verbunden ist/sind, **dadurch gekennzeichnet,**
- **dass** in der Temperaturmesssonde (1) ein plattenförmiger, aus einem elektrisch isolierendem Kunststoff bestehender Sensorträger (10) angeordnet ist, und
- **dass** auf den gegenüberliegenden Oberflächen (11) des Sensorträgers (10) beidseitig Massenleiterflächen (13) angeordnet sind, die in ihrer Gesamtheit als Masseleiter (7) dienen und mittels Durchkontakte (12) elektrisch leitend miteinander verbunden sind, und
- **dass** in diesen Massenleiterflächen (13) ein- oder beidseitig des Sensorträgers (10) Freiflächen (14) derart angeordnet sind, dass mittig in diesen Freiflächen (14) von der/den Massenleiterflächen (13) elektrisch isolierend beabstandet, Signalleiterbahnen (15) angeordnet sind, welche sofern sie beidseitig auf den gegenüberliegenden Oberflächen (11) des Sensorträger (10) angeordnet sind, untereinander mittels Durchkontakte (12) elektrisch leitend verbunden sind, und damit in ihrer Gesamtheit den Signalleiter (9) ausbilden, und
- **dass** den jeweiligen Kontaktanordnungen am/an den eingesetzten Resonator/en (6) zugeordnet, in der resonatorseitigen Massenleiterfläche (13) eine/mehrere zusätzliche Freifläche/n (14) angeordnet sind, in der/den von der/den Massenleiterfläche/n (13) beabstandet, elektrisch isoliert Signalkontaktflächen (16) angeordnet sind, wobei diese mittels Durchkontakten (12) elektrisch leitend mit dem auf der gegenüberliegenden Oberfläche (11) des Sensorträgers (10) verlaufenden Signalleiter (9) verbunden sind, und
- **dass** der/die Resonator/en (6) am Sensorträger (10) derart angeordnet sind, dass dieser/diese elektrisch leitend einerseits mit der/den Massenleiterflächen (13) und andererseits entweder direkt mit den Signalleiterbahnen (15) oder mit den Signalkontaktflächen (16) verbunden ist/sind, und
- **dass** am Sensorträger (10) eine mit den Signalleiterbahnen (15) verbundene Antenne (8) angeordnet ist, und
- **dass** am Sensorträger (10), zwischen der Antenne (8) und dem/den Resonator/en (6), eine Impedanzanpassungseinheit (30) angeordnet ist, die aus einem Kondensator (18) und einer Induktivität (19) besteht, wobei im Bereich der Anordnung des Kondensators (18) in der Signalleiterbahn (15) eine Unterbrechung (32) angeordnet ist, die von dem im Bereich dieser Unterbrechung (32) angeordneten Kondensator (18) elektrisch überbrückt wird, indem dieser mit den beiden, der Unterbrechung (32) beabstandet benachbarten, Endstücken der Signalleiterbahn (15), oder mit den beiden dort voneinander beabstandet angeordneten Signalkontaktflächen (16), elektrisch leitend verbunden ist, wobei die diesem Kondensator (18) benachbart angeordnete Induktivität (19) einerseits mit der Signalleiterbahn (15), oder einer dort angeordneten Signalkontaktfläche (16), und andererseits mit der/den Massenleiterfläche/n (13) des Masseleiters (7) elektrisch leitend verbunden ist, und die Impedanzanpassungseinheit (30) dabei so ausgelegt/bemessen ist, dass der Wirkwiderstand der Antenne (8) etwa dem Wirkwiderstand des/der Resonators/Resonatoren (6) in dessen/deren Arbeitsfrequenzbereich entspricht.

2. Temperaturmesssonde (1) nach Anspruch 1, **dadurch gekennzeichnet, dass** am Sensorträger (10) eine mit der/den Massenleiterfläche/n (13) verbundene Massekontaktfeder (17) derart angeordnet ist, dass diese im Endmontagezustand der Temperaturmesssonde (1) an der Innenwandung des elektrisch leitfähigen Temperaturmessspießes (3) elektrisch leitend anliegt.

3. Temperaturmesssonde (1) nach Anspruch 1 oder Anspruch 2, **dadurch gekennzeichnet, dass** der Griff (4) von einer zur Aufnahme der Antenne (8) dienenden, aus einem nicht elektrisch leitfähigen Hartstoff gebildeten Griffhülse (20), einem auf der Griffhülse (20) angeordneten elastischen Griffstück (21) und einem Deckel (22) besteht.

4. Temperaturmesssonde (1) nach einem oder mehreren der Ansprüche 1 bis 3, **dadurch gekennzeichnet, dass** zur Aufnahme der Antenne/n (8) in einer antennenseitigen Freifläche (14) am Sensorträger (10) ein mit der Signalleiterbahn (15) elektrisch leitend verbundenes Antennenaufnahmeelement (23) angeordnet ist.

5. Temperaturmesssonde (1) nach Anspruch 4, **dadurch gekennzeichnet, dass** an dem am Sensorträger (10) angeordneten Antennenaufnahmeelement (23) eine Monopolantenne (24) angeordnet ist.

6. Temperaturmesssonde (1) nach Anspruch 4, **dadurch gekennzeichnet, dass** an dem am Sensorträger (10) angeordneten Antennenaufnahmeelement (23) eine Dipolantenne (25) angeordnet ist.

7. Temperaturmesssonde (1) nach einem oder mehreren der Ansprüche 1 bis 3, **dadurch gekennzeichnet, dass** unmittelbar am Sensorträger (10) eine Antennenträgerplatte (26) angeordnet ist, so dass der Sensorträger (10) zusammen mit der Antennenträgerplatte (26) einstückig/monolithisch ausgebildet ist, wobei auf der Antennenträgerplatte (26) eine elektrisch leitend mit der Signalleiterbahn (15) verbundene Antennenleiterbahn (27) angeordnet ist.

8. Temperaturmesssonde (1) nach Anspruch 7, **dadurch gekennzeichnet, dass** die auf der Antennenträgerplatte (26) angeordnete Antennenleiterbahn (27) spiralförmig ausgebildet ist.

9. Temperaturmesssonde (1) nach Anspruch 7, **dadurch gekennzeichnet, dass** die auf der Antennenträgerplatte (26) angeordnete Antennenleiterbahn (27) mäanderförmig ausgebildet ist.

## Claims

1. Temperature measuring probe (1), with a hollow external sheath (2), made out of an electrically conducting section, made from a metallic materials, the temperature measuring lance (3), and an electrically insulated section, made of from a non-metallic material, the grip (4),wherein in the electrically conductive temperature measuring lance (3) has a pointed tip (5) with at least one temperature sensor designed as a resonator (6), which on the one hand is connected to the electrically conducting temperature measuring lance (3) via an earth lead (7), and on the other side is connected with an antenna (8) installed in the electrically insulated grip (4) via a signal lead (9) in an electrically conducting method, **characterized in,**
- **that** in the temperature measuring probe (1) a plate-shaped sensor support (10) is arranged, made from an electrically insulating plastic, and
- **that** on the opposite facing surfaces (11) of the sensor support (10) double-sided earth conductor surfaces (13) are arranged, which act as an earth lead (7) in their entirety and are connected electrically conducting to one another by means of continuous contacts (12), and
- **that** in these earth conductor surfaces (13) on one or both sides of the sensor support (10) free surfaces (14) are arranged in such a way, that in the middle of these free surfaces (14) separated at a distance from the earth conductor surfaces (13) in an electrically insulated manner, signal conductor paths (15) are arranged, which insofar as they are arranged on both sides of the opposing surfaces (11) of the sensor support (10), are connected to one another by means of continuous contacts (12) in an electrically conducting manner, and therefore form signal leads (9), and
- **that** the respective arrangement of conductors in each case is allocated at/on the resonator (6), in which the resonator side earth conductor surface (13) has one/more additional free surfaces (14) arranged, in which separated at a distance from the earth conductor surface(s) (13), electrically insulated signal contact surfaces (16) are arranged, wherein these are connected using continuous contacts (12) in an electrically conducting manner to the signal leads (9) running across the opposing surface (11) of the sensor support (10), and
- **that** the resonator(s) (6) on the sensor support (10) is (are) arranged in such a way that it/these is/are connected on the one hand electrically conducting with the earth conductor surface(s) (13) and on the other hand is/are directly connected to the signal conductor paths (15) or to the signal contact surfaces (16), and
- **that** on the sensor support (10), an antenna (8) is arranged, connected to the signal conductor paths (15), and
- **that** an impedance adjustment unit (30) is arranged on the sensor support (10), between the antenna (8) and the resonator(s) (6), consisting of a capacitor (18) and an inductance (19), wherein for the region in which the capacitor (18) is arranged in the signal conductor path (15), an electrical breaker (32) is arranged, which is electrically by-passed from the capacitor (18) arranged in the region of this breaker (32), by connecting it with the two neighboring end-pieces of the signal conductor paths (15) separated at a distance from the breaker (32), or with the two signal contact surfaces (16) arranged there, separated from one another, in an electrically conductive manner, wherein the adjacent inductance (19) arranged near this capacitor (18) on the one hand is connected to the signal conductor path (15), or to a signal contact surface (16) arranged there, and on the other hand is connected to the earth conductor surface(s) (13) of the earth lead (7) in an electrically conducting manner, and the impedance adjustment unit (30) is designed/dimensioned in such a way here, that the effective resistance of the antenna (8) corresponds approximately to the effective resistance of the resonator(s) (6) in its/their operating frequency region.

2. Temperature measuring probe (1) according to Claim 1, **characterized in that** an earth contact plate (17) is arranged on the sensor support (10), connected to a/the earth conductor surface(s) (13) in such a way that, in the finally installed condition of the temperature measuring probe (1) these lie against the internal walling of the electrically conducting temperature measuring lance (3) in an electrically conducting manner.

3. Temperature measuring probe (1) according to Claim 1 or Claim 2, **characterized in that** the grip (4) is composed of a grip sheath (20) made of a non-electrically conducting hard material serving to take up the antenna (8), and an elastic grip piece (21) arranged on the grip sheath (20) and a cover (22).

4. Temperature measuring probe (1) according to one or more of Claims 1 to 3, **characterized in that** for taking up the antenna (8), an antenna take-up element (23) has been arranged in a free surface (14) on the antenna side of the sensor support (10), connected in an electrically conductive manner to a signal conductor path (15).

5. Temperature measuring probe (1) according to Claim 4, **characterized in that** a uni-pol antenna (24) is arranged on the antenna take-up element (23) arranged on the sensor support (10).

6. Temperature measuring probe (1) according to Claim 4, **characterized in that** a di-pol antenna (25) is arranged on the antenna take-up element (23) arranged on the sensor support (10).

7. Temperature measuring probe (1) according to one or more of the Claims 1 to 3, **characterized in that** an antenna support plate (26) is arranged directly on the sensor support (10), so that the sensor support (10) together with the antenna support plate (26) has a single component /monolithic design, wherein an antenna conductor path (27) is arranged on the antenna support plate (26) connected with the signal conductor path (15) in an electrically conducting manner.

8. Temperature measuring probe (1) according to Claim 7, **characterized in that** the antenna conductor path (27) arranged on the antenna support plate (26) is formed with a spiral connector path.

9. Temperature measuring probe (1) according to Claim 7, **characterized in that** the antenna conductor path (27) arranged on the antenna support plate (26) has a meandering shape.

## Revendications

1. Sonde de mesure de température (1), avec une douille extérieure (2) creuse, composée d'un piquet de mesure de température (3) conducteur d'électricité, formé d'une section en matériau métallique, et d'une poignée (4) non conductrice d'électricité, formée d'une section en matériau non métallique, au moins un capteur de température fonctionnant comme résonateur (6) étant disposé avec une pointe (5) dans le piquet de mesure de température (3) conducteur d'électricité, lequel/lesquels capteur/s étant relié/s d'une part au piquet de mesure de température (3) conducteur d'électricité via un conducteur de terre (7) et d'autre part à une antenne (8) disposée dans la poignée (4) électriquement isolée via un conducteur de signal (9) conducteur d'électricité, **caractérisée par le fait**
- **qu'**un support de capteur (10) en plastique en forme de plaque et électriquement isolant est disposé dans la sonde de mesure de température (1), et
- **que**, sur les surfaces (11) opposées du support de capteur (10), des surfaces de conducteur de terre (13) sont disposées des deux côtés, servant dans leur totalité de conducteur de terre (7) et étant reliées électriquement ensemble au moyen de contacts traversant (12), et
- **que**, dans ces surfaces de conducteur de terre (13) sur un ou deux côtés du support de capteur (10), des surfaces libres (14) sont disposées de telle manière que des voies de conducteur de signal (15) sont ordonnées au centre de ces surfaces libres (14) et électriquement isolées de la/des surface/s de conducteur de terre (13), lesquelles voies, dans la mesure où elles sont disposées des deux côtés sur les surfaces (11) opposées du support de capteur (10), sont reliées électriquement entre elles au moyen de contacts traversant (12) et formant ainsi dans leur ensemble le conducteur de signal (9), et
- **qu'**une ou plusieurs surfaces libres (14) supplémentaires soit/soient disposée/s dans la surface de conducteur de terre (13) côté résonateur, attribuée/s aux dispositions de contact respectives sur le/les résonateur/s (6) utilisés, dans laquelle/lesquelles surface/s à distance de la/des surface/s de conducteur de terre (13) sont disposées des surfaces de contact de signal (16) électriquement isolées, lesquelles étant reliées électriquement au moyen des contacts traversant (12) au conducteur de signal (9) passant sur la surface (11) opposée du support de capteur (10), et
- **que** le/les résonateur/s (6) sur le support de capteur (10) est/sont disposé/s de telle manière que celui-ci/ceux-ci est/sont relié/s, d'une part, électriquement à la/aux surface/s de conducteur de terre (13) et, d'autre part, soit directement aux voies de conducteur de signal (15), soit aux surfaces de contact de signal (16), et
- **qu'**une antenne (8) reliée aux voies de conducteur de signal (15) est disposée sur le support de capteur (10) et
- **que**, sur le support de capteur (10), entre l'antenne (8) et le/les résonateur/s (6), une unité d'adaptation d'impédance (30) est disposée, laquelle se compose d'un condensateur (18) et d'une inductance (19), une interruption (32) étant placée dans la zone de disposition du condensateur (18) dans la voie de conducteur de signal (15), laquelle étant enjambée électriquement par le condensateur (18) disposé dans la zone de cette interruption (32), lequel condensateur étant relié électriquement, soit aux deux extrémités de voie de conducteur de signal (15) voisines et distantes de l'interruption (32), soit aux deux surfaces de contact de signal (16) distantes entre elles, l'inductance (19) disposée au voisinage de ce condensateur (18) étant reliée électriquement, d'une part à la voie de conducteur de signal (15) ou à une surface de contact de signal (16) y étant disposée, et d'autre part à la/aux surfaces/s de conducteur de terre (13) du conducteur de terre (7), et l'unité d'adaptation d'impédance (30) étant conçue/mesurée de manière à ce que la résistance active de l'antenne (8) corresponde approximativement à la résistance active du/des résonateur/s (6) dans sa/leur plage de fréquence de fonctionnement.

2. Sonde de mesure de température (1) selon l'exigence 1 **caractérisée par le fait que**, sur le support de capteur (10), un ressort de contact de terre (17) relié à la/aux surface/s de conducteur de terre (13) est disposé de manière à ce qu'il repose, dans l'état de montage final de la sonde de mesure de température (1), sur la paroi intérieure du piquet de mesure de température (3) conducteur d'électricité en assurant une conductivité électrique.

3. Sonde de mesure de température (1) selon l'exigence 1 ou l'exigence 2 **caractérisée par le fait que** la poignée (4) se compose d'une douille de poignée (20) destinée à la réception de l'antenne (8) et conçue dans un matériau dur non conducteur d'électricité, d'un élément de poignée (21) élastique disposé sur le douille de poignée (20) et d'un couvercle (22).

4. Sonde de mesure de température (1) selon une ou plusieurs des exigences 1 à 3 **caractérisée par le fait qu'**un élément de réception d'antenne (23) relié électriquement à la voie de conducteur de signal (15) et servant à la réception de l'/des antenne/s (8) est disposé dans une surface libre (14) du côté d'antenne sur le support de capteur (10).

5. Sonde de mesure de température (1) selon l'exigence 4 **caractérisée par le fait qu'**une antenne unipolaire (24) est disposée sur l'élément de réception d'antenne (23) placé sur le support de capteur (10).

6. Sonde de mesure de température (1) selon l'exigence 4 **caractérisée par le fait qu'**une antenne dipolaire (25) est disposée sur l'élément de réception d'antenne (23) placé sur le support de capteur (10).

7. Sonde de mesure de température (1) selon une ou plusieurs des exigences 1 à 3 **caractérisée par le fait qu'**une plaque de support d'antenne (26) est disposée directement sur le support de capteur (10), de façon à ce que le support de capteur (10) soit d'un seul tenant/monolithique avec la plaque de support d'antenne (26), une voie de conducteur d'antenne (27) reliée électriquement à la voie de conducteur de signal (15) étant disposée sur la plaque de support d'antenne (26).

8. Sonde de mesure de température (1) selon l'exigence 7 **caractérisée par le fait que** la voie de conducteur d'antenne (27) disposée sur la plaque de support d'antenne (26) est conçue en forme de spirale.

9. Sonde de mesure de température (1) selon l'exigence 7 **caractérisée par le fait que** la voie de conducteur d'antenne (27) disposée sur la plaque de support d'antenne (26) est conçue en forme de méandres.
